# EUROPEAN PATENT SPECIFICATION

(11) **EP 1 223 099 B1**
(45) Date of publication and mention of the grant of the patent: **28.02.2007**
(21) Application number: 01205035.7
(22) Date of filing: 20.12.2001
(51) Int. Cl.: B62J 6/00

(54) **Bicycle lighting device**
Beleuchtungseinrichtung für ein Fahrrad
Dispositif d'éclairage pour bicyclette

(30) Priority: 11.01.2001 NL 1017081
(43) Date of publication of application: 17.07.2002
(73) Proprietor: Spanninga Metaal B.V., 8501 AA Joure (NL)
(72) Inventor: Vets, Hugo, Hulshout (BE)
(74) Representative: Valkonet, Rutger

(56) References cited:
- DE-A- 3 444 178
- DE-A- 4 222 994

## Description

The invention relates to a b A bicycle lighting device comprising one or more lighting elements, a dynamo, a DC voltage source and means for supplying at least one lighting element with power from the DC voltage source in the event of the current and/or voltage supplied by the dynamo dropping out.

Hereinafter, the term lighting element will be used to indicate both incandescent lamps and light-emitting diodes or other elements that emit light when an electric voltage is applied thereto.

A lighting device according to the preamble of claim 1 is known from German patent application DE 3444178. The bicycle lighting device that is disclosed therein comprises a dynamo which is directly connected to a lamp and which is also connected to a battery via a rectifier, which battery is connected to a number of light-emitting diodes via a FET.

A practically identical circuit is also known from German patent application DE 4222994, which however comprises a capacitor instead of a battery which capacitor is charged by the dynamo via a rectifier and which discharges through a light-emitting diode via a FET when the bicycle, and thus the dynamo, stops.

A drawback of the known devices is the fact that they are only capable of supplying lighting elements exhibiting a low power consumption with current for a limited period of time. Consequently, the incandescent lamp of the headlight of the bicycle according to said German patent applications is not connected to the battery or to the capacitor, but only directly to the dynamo. As a consequence, the headlight will turn off each time the bicycle, and thus also the dynamo, stops.

The object of the invention is to provide a device by means of which it is possible, without using mechanical switches or relays, to drive not only light-emitting diodes, which consume little energy and which also produce little light, when the dynamo has stopped, but also to supply current to the headlight in case the bicycle, and thus the dynamo, has stopped.

Furthermore, a device according to the invention should meet the requirement that both AC voltage and DC voltage can be switched. An additional requirement is that the bicycle lighting device according to the invention should not exhibit a voltage loss of larger than a few per cent of the AC voltage of the dynamo across the means which are provided to enable switching between the dynamo and the rectifier. In the case of a usual dynamo, which supplies an AC voltage of 6 Volt, and a voltage loss of three per cent, for example, this means that the voltage drop must not exceed 0.18 Volt.

Therefore, a bicycle lighting device according to the invention is characterized in that said means comprise at least three FET's being operatable in an open, conducting state, wherein voltage is passed through and a closed non-conducting state, wherein voltage is not passed through, as well as a control device being operatively connected with at least said three FET's, said dynamo and said battery, wherein said a first and a second FET are connected in series and in opposition between the dynamo and said one or more lighting elements, and said third FET is connected in series between the DC voltage source and said one or more lighting elements, and wherein said control device is arranged in bringing the first and second FET's in their open, conducting state, when voltage is being supplied by the dynamo to said control device, and wherein the control device is arranged in bringing said third FET in its open, conducting state in the absence of a voltage being supplied by the dynamo to said control device.

As a result, the first and the second FET will provide the entire AC voltage from the dynamo, with the exception of a minor voltage drop across the first and the second FET, to all the lighting elements on the bicycle. When no voltage is being supplied by the dynamo, the control device will open a third FET, such that all lighting elements of the bicycle will be provided with supply voltage by a battery. The switching from battery to dynamo and from dynamo to battery by the control device takes place entirely automatic, without mechanical switches or relays being used.

One preferred embodiment of bicycle lighting device according to the invention is characterized in that the control device is arranged for detecting the presence or absence of voltage supplied by the dynamo, in that signals comprising an AC voltage component are present on a first and a second output of the control device when a voltage is being supplied by the dynamo, which AC voltage components are of equal frequency and of opposite phase, in that the first and the second FET's are interconnected via their source, in that the drain of the first FET is connected to the dynamo and in that the drain of the second FET is connected to one or more of the lighting elements, in that the first and the second output of the control device are connected to a voltage multiplying circuit, and in that a third and a fourth output of the voltage multiplying circuit are connected to the gate connections and the source connections, respectively, of the first and the second FET.

As a result, the first and the second FET are controlled in a fully electronic and simple manner by the control device to transmit practically the entire AC voltage from the dynamo to the lighting elements of the bicycle.

Another preferred embodiment of a bicycle lighting device according to the invention is characterized in that the DC voltage source is a battery, and in that a circuit which generates a supply voltage is provided for generating supply voltage for the control circuit, which supply voltage generating circuit is connected to the battery, in that the supply voltage generating circuit can be triggered and in that triggering means are present for activating the supply voltage generating circuit.

As a result, the control circuit will only be activated if supply voltage is present, and such a supply voltage will only be present upon activation of the supply voltage generating circuit by the trigger means. As a result of this it can be achieved that in the case of prolonged standstill of a bicycle fitted with a bicycle lighting device according to the invention, there will be no power consuming elements that will fully drain the battery after some time, no matter how little power they consume.

Another preferred embodiment of a bicycle lighting device according to the invention is characterized in that time switching means are present and in that the time switching means will stop after a predetermined period of time in order to cease the supply voltage to the control device in the absence of a trigger signal and a voltage being supplied by the dynamo and/or charging device.

As a result, the control device will be completely deactivated and none of the light elements will consume power from the battery during standstill of the bicycle. This enables parking of the bicycle for a very long period of time without draining the battery because an element in the control circuit still needs to be supplied with current and/or voltage. Because of this, the reliability of the bicycle lighting device according to the invention, by means of which all lighting elements of the bicycle can be supplied with voltage during standstill, is very large.

The invention will now be explained in more detail by means of an exemplary embodiment as shown in the accompanying drawings, in which:
Figure 1 is a representation of a bicycle headlamp in which a circuit according to the invention is fitted; and
Figure 2 is a partially sectional view of a circuit which can be used in a device according to the invention.

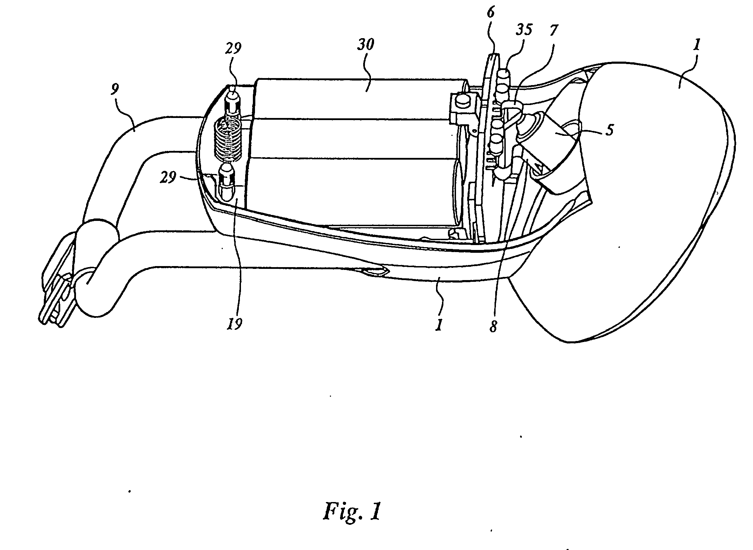

Figure 1 shows a bicycle headlight comprising a housing 1 whose interior can be closed by means of a cover (not shown). Present in the headlight is a light source, for example an incandescent lamp 5. A carrier in the form of a so-called printed circuit board 6 is mounted in the housing 1. Arranged on the printed circuit board 6 are two connection contacts in the form of contact springs 7 and 8, which in a usual manner is adjoined against one end of the incandescent lamp 5.

The housing 1 of the headlight can be connected, in a removable manner, to a support 9, which is made up of a substantially U-shaped bracket, made out of a tubular material.

Sealing caps (not shown) are inserted in the ends of the tubular support 9, which caps carry contact points at their free ends, to which ends of electric wires (not shown) are connected. These electric wires can be passed to the outside, for example for connection to a power source, such as a dynamo, and/or for connection to a rear light of the vehicle, generally a bicycle, on which the headlight will be fitted.

The housing 1 of the headlight is further provided with duct-shaped recesses bounded by wall portions, into which the legs of the support 9, which extend parallel to each other, can be inserted. A locking yoke 19 disposed within the housing is used for fixing the inserted support 9 to the housing 1.

Holes are further formed in the locking yoke 19, by means of which holes the cover (not shown) is fixed to the housing.

Batteries 30 are furthermore shown to be present in the housing 1, which batteries are connected to a contact point on the carrier or printed circuit board 6. Further present on the carrier or printed circuit board 6 is a connection element, which is accessible via an opening formed in the housing 1 for connecting an adapter, by means of which the batteries can be charged. Furthermore present on the carrier or printed circuit board 6 is a pressure switch for turning the lamp on and off. This switch can be operated via a depressible portion of the cover. In addition, light diodes are present on the printed circuit board, which light diodes are visible through transparent portions of the cover, so that the user of the vehicle can check the operation of the lamp.

The support 9 can be fixed to the frame of a bicycle or similar vehicle by means of a common clamping or similar element and be set in the desired position.

A more detailed description of the lamp that is shown in figure 1 can be found in the applicant's Dutch patent application no. 1016189.

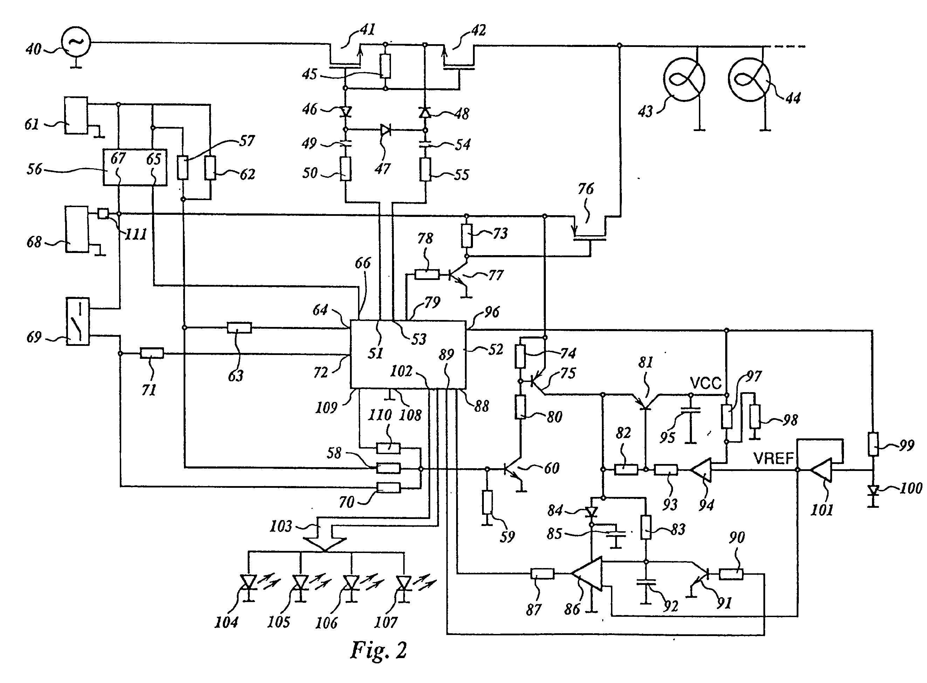

Hereinafter, a description will be given of the electronic circuit that is present on the printed circuit board 6, which circuit is shown in figure 2. In the first place, figure 2 shows a dynamo 40, which is connected to mass with one electrode and to a drain of the FET 41 with the other electrode. The source of FET 41 is connected to a source of a FET 42. The drain of the FET 42 is connected to a first connection of one or more of the lighting elements of the bicycle, two of which are indicated by the numerals 43 and 44. The gates of the FET's 41 and 42 are interconnected. A resistor 45 is fitted between the gates and the sources of the FET's 41 and 42. Three diodes 46, 47 and 48 are connected in parallel to resistor 45. A capacitor 49 and a resistor 50 are connected in series at the junction of the diodes 46 and 47 and connected to a first output 51 of a control device 52. Similar, a capacitor 54 and a resistor 55 are connected in series between the junction of the diodes 46 and 47 and a second output 53 of the control device 52.

The diodes 46, 47 and 48 and the capacitors 49 and 54 constitute a voltage-multiplying circuit. If signals comprising AC voltage components are supplied in opposite phase via the resistors 50 and 55, a DC voltage will be generated across the resistor 45, which makes the gate-source voltage of the FET's 41 and 42 sufficiently high for causing said FET's to conduct. As a result of the connection in opposition, one of the FET's will be non-conducting at all times in the presence of an AC voltage from the dynamo and in the absence of the signals comprising an AC voltage component.

The junction of the dynamo 40 with the drain of the FET 41 is also connected to an input of a circuit 56 which limits the charging current and, via resistors 57 and 58, to the junction between a resistor 59 and the base of a transistor 60. The resistor 59 is connected to mass with the other connection, as is the emitter of transistor 60. A further input of the circuit 56 which limits the charging current is connected to an output of a charging device 61. The output of the charging device 61 is also connected to the junction of the resistors 57 and 58 via a resistor 62. The junction of the resistors 57 and 58 and 62 is also connected to an input 64 of the control circuit 52 via a resistor 63. A further input 65 of the charging current limiting circuit 56 is connected to an output 66 of the control circuit 52. An output 67 of the charging current limiting circuit 56 is connected to a current output of a battery 68. A mass output of battery 68 is connected to mass. The current output, hereinafter called output, of the battery 68 is also connected to a first connection of a switch 69, a second connection of which is connected to the junction of the resistors 58 and 59 via a resistor 70. The second connection of the switch 69 is also connected to an input of the control circuit 52 via a resistor 71. The output of the battery 68 is also connected to a resistor 73, to a junction between a resistor 74 and an emitter of a transistor 75 and to a source of an FET 76. The other connection of the resistor 73 is connected both to the gate of FET 76 and to the collector of transistor 77. The base of transistor 77 is connected to an output 79 of control circuit 52 via a resistor 78. The emitter of transistor 77 is connected to mass. The drain of FET 76 is connected to the drain of FET 42 and consequently also to one connection of the lighting elements 43 and 44, etc. Resistor 74 is connected both to the base of transistor 75 and to one side of a resistor 80, another side of which resistor 80 is connected to the collector of transistor 60. The collector of transistor 75 is connected to the emitter of a transistor 81 as well as to a resistor 82, to a resistor 73 and to a diode 84. A capacitor 85 is connected between a cathode of diode 84 and mass, with the junction of diode 84 and capacitor 85 being connected to a supply voltage input of an operational amplifier 86. One output of operational amplifier 86 is connected to an input 88 of the control device 52 via a resistor 87. An output 89 of control device 52 is connected to a base of a transistor 91 via a resistor 90, the emitter of which transistor is connected to mass and the collector of which is connected to the second connection of the resistor 83 as well as to mass, via a capacitor 93, and to an input of the operational amplifier 86. The second connection of resistor 82 is connected both to the base of transistor 81 and to a resistor 93, the other connection of which is connected to the output of an operational amplifier 94. The collector of transistor 81 is connected to a first connection of a capacitor 95, the second connection of which is connected to mass. Furthermore, the collector of transistor 81 is connected to a supply voltage input 96 of the control circuit 52 as well as to mass, via a resistance part comprising resistors 97 and 98, and also to mass via a resistor 99 and a diode 100. The junction of the resistors 97 and 98 is connected to a first input of the operational amplifier 94, whilst the second input of the operational amplifier 94 is connected to an output of an operational amplifier 101. The output of operational amplifier 101 is also connected to the inverting input of operational amplifier 101. The output of operational amplifier 101 is further connected to an input of operational amplifier 86. An output 102 of control device 52 is connected, via conductors indicated at 103, to four light-emitting diodes 104, 105, 106 and 107, whose other connections are connected to mass. The control device 52 is also connected to mass via a connection 108. An output 109 of control circuit 52 is connected to the junction of the resistors 70, 58 and 59 and the base of transistor 60 via a resistor 110.

The operation of the circuit that is shown by way of example in figure 2 will now be discussed. In the discussion of the operation of the circuit according to figure 2, it is first assumed that the dynamo 40 does not supply any voltage and that the charging device 61 does not supply any voltage, either. Only the battery 68 supplies voltage to the junction of resistor 73, transistor 75 and FET 76. It should be considered that consequently the transistor 60 does not conduct, as a result of which transistor 75 does not conduct and the voltage Vcc at the junction of the collector of transistor 81 and the capacitor 95 and the resistor 97 is zero. This means that the control device 52 is without voltage and thus without current.

The circuit is started as follows. Transistor 60 receives a signal at the base, which signal is either received from the pressure switch 69 via resistor 70, or from the dynamo 40 via resistor 57 and resistor 58, or from the charging device 61 via resistor 62 and resistor 58. The signal which can also be received at the base via resistor 110 originates from the control device 52, which is still "dormant" at that point in time. Said signal is not present, therefore. A preferred control device 52 is the Microchip PIC16R54 processor. Hereinafter, the control device 52 will be referred to as microprocessor 52. When transistor 60 is opened, transistor 75 will be opened as well. As a result of transistor 75 being opened, the emitter of transistor 81 will be connected to the junction of the resistor 73, the transistor 75, 76 and the positive terminal of the battery and thus to the battery voltage. Furthermore, the operational amplifier 86 is supplied with voltage via diode 84. Transistor 81 is opened by means of capacitor 95, resistor 82, resistor 93, operational amplifier 94, resistor 97 and resistor 98, as a result of which capacitor 95 is charged. During this charging process, the voltage across resistor 99 and LED 100 will also increase, as a result of which the reference voltage Vref will be created, which reference voltage consists of the voltage across LED 100, viz. about 1.7 Volt. By selecting a very large value for resistor 99, e.g. 100 k , the current through LED 5 is very small. The reference voltage Vref of 1.7 Volt is made low-ohmic by means of operational amplifier 101.

The reference voltage Vref is also supplied to the inverting input of operational amplifier 94 and arranges for the voltage Vcc across capacitor 95 to be stabilized at 4.5 Volt. As long as Vcc is less than 4.5 Volt, especially if Vcc is in the order of magnitude of 0 Volt, also the reference voltage Vref will be approximately 0 Volt, which voltage is inverted by the operational amplifier 94 to the maximum output voltage of operational amplifier 94, as a result of which transistor 81 will be opened as far as possible so as to charge capacitor 95 as quickly as possible. As soon as Vcc has reached a value of about 2 Volt, which voltage is supplied to the microprocessor via input 96, the microprocessor 52 will "wake up", since it is capable of operating at a supply voltage of 2 Volt already.

The microprocessor 52 is so programmed that as soon as it wakes up, it will first check whether this is the result of a button 69 being operated. To that end, the output signal produced as a result of the button 69 being operated is coupled to input 72 of the microprocessor 52 via resistor 71. If the microprocessor discovers that its voltage is present (the entire procedure as described so far takes place within the period during which the button is being pressed) as a result of the button 69 being operated, the microprocessor 52 will thus know that the charging device 61 is not activated, and that consequently the dynamo 40 is not activated, either. Accordingly, the microprocessor 52 will deliver a signal on output 79, thus operating the transistor 77, which provides a voltage difference between the source and the gate of FET 76. This enables the battery to supply current to the lamps 43 and 44 via FET 76.

The microprocessor 52 keeps itself going by ensuring that, once it has woken up, the supply voltage Vcc on input 96 will remain. This is accomplished by producing a signal on the output 109 of the microprocessor 52 which causes the transistor to open or remain open. As a result, the transistor 75 will be opened. The elements resistor 83, capacitor 92, transistor 91, capacitor 85, operational amplifier 86 and resistor 90 together form a simple analog/digital converter. The time that the capacitor 92 needs to reach the voltage Vref is a measure of the battery voltage that is present, via transistor 75, at the junction of diode 84 and resistor 83, on the basis of which the microprocessor decides whether the entire circuit must be turned off because the battery voltage is too low or that everything can proceed as desired by the person operating the device. The time is also used for energizing one of the two LED's 104 and 105. If the battery voltage is high enough, LED 104 will light up green, for example, whilst the LED 105 will light up red, for example, if the battery voltage is lower than desired.

In the foregoing, the reaction of the microprocessor 52 to the generation of the "wake-up" signal by means of button 69 has been described. There are two further methods of waking the microprocessor from its dormant state.

The first method is by means of the dynamo 40. The dynamo 40 generates an AC voltage signal, which is supplied to transistor 60 via resistor 57 and resistor 58. The AC voltage signal will cause the transistor 60 to turn on and off. When the transistor turns on, at any rate the first time it does so, the entire circuit as described above will be activated and as a result the microprocessor 52 will be activated. The AC voltage that is present at the base of transistor 60 is also present at the junction of resistor 57 and resistor 58. The AC voltage in question goes to the input 64 of the microprocessor 52 via resistor 63. The microprocessor 52 will recognize the presence of the AC voltage signal on input 64 as a succession of alternating ones and zeroes. The microprocessor thus knows that the "wake-up" signal comes from the dynamo.

The second method is by means of the charging device 61. The charging device 61, which is capable of charging the battery 68 via the charging current limiting circuit 56, is also connected, via resistor 62, to the junction of resistor 57 and resistor 58. If the charging device 61 is connected instead of the dynamo 40 as described above, this connection will again cause the transistor 60 to be opened via resistor 58, as a consequence of which the microprocessor 52 will be woken up from its dormant state. The microprocessor 52 can recognize, likewise via the input 64, that it is the charging device 61 that caused it to wake up from its dormant state, because the charging device 61 generates a DC voltage signal, which may be contaminated by a small amount of ripple thereon. Said DC voltage signal is supplied to the input 64 of the microprocessor 52 via resistor 62 and resistor 63. The microprocessor 52 will recognize the state of constancy of the voltage on input 64 as a sequence of ones and conclude therefrom that it is the charging device 61 that "woke it up" from its "dormant state".

Since the microprocessor knows the reason why it was "woken up" from its "dormant state", it will also know whether signals comprising AC voltage components, which are of opposite phase, are to be put on the outputs 51 and 53. Preferably, the AC voltage components are square-wave voltages. The microprocessor 52 will thus know whether square-wave voltages of opposite phase are to be put on the outputs 51 and 53 (if the dynamo 40 has "woken up" the microprocessor 52) or that transistor 77 is to be operated via a signal on output 79 to open the FET 76 (if button 69 has been operated) or that neither the one nor the other is to be done, because the charging device 61 is connected and the charging device is to be used for charging the battery 68.

It is possible to cause the FET 76 to conduct even if the charging device 61 is connected and the FET 76 is not in its conducting state, namely by operating the button 69. This does not influence the operation of the transistor 60, to be sure, because the transistor 60 has already been operated from the charging device 61 via resistor 62 and resistor 58. However, the operation of the button 69 will cause voltage to appear on the input 72 of the microprocessor 52 via resistor 71. As soon as that signal appears, the microprocessor will know that the lamps 43, 44 are intended to produce light, and transistor 77 will be operated via output 79 and resistor 73 to apply a voltage difference between the source and the gate of FET 76.

The microprocessor 52 is designed to effect a so-called soft start. It is a well-known fact that bicycle lamps do not stand up very well to being switched directly to a battery supply source by means of a switch. The lamps are cold prior to being switched on, and the resistance of the incandescent filament is low at that point. As a result, the current through the filament is initially very high when the switch is closed and the full battery voltage is applied to the filament, which situation lasts until the temperature of the filament has increased sufficiently for limiting the current to an acceptable value. When the filament of a bicycle lamp is frequently subjected to the full battery voltage, this leads to a significant reduction of the lifespan of the lamp. This phenomenon does not occur in the case of dynamo supply, because there is always a start-up phase when a dynamo is used, during which phase the dynamo delivers a voltage that increases from zero to full value, which takes place slow enough to limit the current through the filament to an acceptable value, especially when it is still cold. The microprocessor 52 therefore includes a so-called soft start, therefore, which in this case implies that when the microprocessor 52 recognizes that the battery supply for the lamps is to be turned on, the signal on output 79, which controls the gate voltage of FET 76 via resistor 73 and transistor 77, does not open FET 76 with one switching step. On the contrary, a square-wave voltage is applied on output 79, as a result of which the pulse-pause ratio of the output signal on output 79 runs up from zero to very large for a few hundred milliseconds. As a result, the voltage that is produced at the drain of FET 76 will be pulsed for the first few hundred milliseconds, during which the pulses are initially very short and gradually increase in length, in such a manner that FET 76 will be open continuously after a few hundred milliseconds.

Another aspect is the charging of the battery 68. Via the analog-digital converter made up of resistor 90, transistor 91, capacitor 92, resistor 83, operational amplifier 86 and resistor 87, the microprocessor 52 knows to what extent the battery 68 is charged. The battery will be a metal hydride or NiCd battery, which must not be overcharged with a continuous charging current, but which may be recharged continuously by float charging. Present on the output 66 of the microprocessor 52 is a signal which is supplied to the charging current limiting circuit 56 and which arranges for the charging current from the charging device 61 to be switched over from continuous charging to float charging as soon as the battery voltage of the battery 68 is sufficiently high. As described above, the microprocessor 52 knows to what extent the battery 68 is charged via the analog-digital converter formed by the elements 83, 92, 91, 85, 86 and 90.

The microprocessor 52 furthermore includes software which is capable of transmitting signals to LED 104, LED 105, LED 106 and LED 107. When the button 69 is pressed once, the circuit will switch to a so-called battery mode in which, as described above, the lamps are put on battery supply via the above-described soft start. At the same time, the LED 104 will light up fully to indicate that the battery mode is on. When the button 69 is pressed twice, the LED 104 will go out and the LED 105 will switch on. This indicates that it is the dynamo that is supplying the voltage to the system, and the square wave will run on the outputs 51 and 53 of the microprocessor 52. If the bicycle should be stationary, however, the dynamo will not supply any voltage, of course, and the battery supply will remain activated for a predetermined period of time (in Germany a period of 4 minutes is legally required). When button 69 is pressed three times, the entire circuit will be turned off.

The charging current limiting circuit is designed such that when the battery is completely empty, one consequence of which is that the microprocessor is unable to operate, the battery will nevertheless be charged. As a result, the microprocessor will not start to operate again until the battery has been recharged to such an extent that the voltage Vcc of 4.5 Volt can be generated by means of transistor 81.

Metal hydride and NiCd batteries are capable of supply large currents. This means that it will be necessary to provide a protection against short-circuiting (which frequently occurs in bicycle installations), because a short circuit can cause copper tracks on the printed circuit board to melt. To that end, a resistor 111 of 0.2 Ohm is connected between the battery and the rest of the circuit. In the case of a short circuit, the current through resistor 111 will be such that the voltage that is present on the emitter of transistor 75 is decreased significantly. As a result, the analog/digital converter that is made up of resistor 83 and capacitor 92 will indicate, together with transistor 91 and operational amplifier 96, to the input 88 of the microprocessor 52, via resistor 87, that the voltage that is present for the source of FET 76 is too low. This will induce the microprocessor 52 to turn off all elements. The consequence of this is, among other things, that there will no longer be a voltage difference between source and gate of FET 76, which will cause FET 76 to close and the short circuit will be separated from the battery.

Several other embodiments of the invention will be apparent to a person skilled in the art who has perused the above. All such embodiments are considered to fall within the scope of the invention as defined by the appended claims.

## Claims

1. A bicycle lighting device comprising one or more lighting elements (43-44), a dynamo (40), a DC voltage source (68) and means for supplying at least one lighting element with power from the DC voltage source (68) in the event of the current and/or voltage supplied by the dynamo (40) dropping out, **characterized in that** said means comprise at least three FET's (41,42,76) being operatable in an open, conducting state, wherein voltage is passed through and a closed, non-conducting state, wherein voltage is not passed through, as well as a control device (52) being operatively connected with at least said three FET's, said dynamo and said DC voltage source (68), wherein said first (41) and a second (42) FET are connected in series and in opposition between the dynamo (40) and said one or more lighting elements (43-44), and said third FET (76) is connected in series between the DC voltage source (68) and said one or more lighting elements (43,44), and wherein said control device (52) is arranged in bringing the first and second FET's (41,42) in their open, conducting state, when voltage is being supplied by the dynamo (40) to said control device, and wherein the control device (52) is arranged in bringing said third FET (76) in its open, conducting state in the absence of a voltage being supplied by the dynamo (40) to said control device.

2. A bicycle lighting device according to claim 1, **characterized in that** the control device (52) is arranged for detecting the presence or absence of voltage supplied by the dynamo (40), **in that** signals comprising an AC voltage component are present on a first and a second output (51,53) of the control device when a voltage is being supplied by the dynamo (40), which AC voltage components are of equal frequency and of opposite phase.

3. A bicycle lighting device according to claim 2, **characterized in that** the first and the second FET (41, 42) are interconnected via their source connection, **in that** the first FET (41) is connected to the dynamo (40) with a drain connection and that the drain connection of the second FET (42) is connected to one or more of the lighting elements (43,44), **in that** the first (51) and the second (53) output of the control device (52) are connected to a voltage multiplying circuit (46-49; 54), and **in that** a third and a fourth output of the voltage multiplying circuit respectively are connected to the gate connections and the source connections respectively of the first and the second FET (41-42).

4. A bicycle lighting device according to any one of the previous claims, **characterized in that** the DC voltage source (68) is a battery and **in that** a supply voltage generating circuit (56) is present for generating a supply voltage for the control circuit, which supply voltage generating circuit is connected to the battery.

5. A bicycle lighting device according to claim 4, **characterized in that** the supply voltage generating circuit can be triggered and **in that** trigger means are present for activating the supply voltage generating circuit.

6. A bicycle lighting device according to claim 5, **characterized in that** the trigger means are arranged for receiving a trigger signal from one or more of the dynamo (40), a with the battery connected button (69) and a charging device (61) of the battery (68).

7. A bicycle lighting device according to any one of the previous claims, **characterized in that** the battery is a float-charge type battery and **in that** a charging current limiting circuit is arranged between the dynamo and/or the charging device on the one hand and the battery on the other hand.

8. A bicycle lighting device according to claim 7, **characterized in that** the charging current limiting circuit is electronically adjustable between continuous charging and float charging.

9. A bicycle lighting device according to claim 8, **characterized in that** the first input of the charging current limiting circuit is connected to a fifth output of the control circuit, **in that** the control circuit is arranged for detecting the extent to which the battery is charged and for delivering a signal to the fifth output for changing over the charging current limiting circuit to float-charging if the extent to which the battery is charged is sufficiently high.

10. A bicycle lighting device according to any one of the claims 4 - 6, **characterized in that** time switching means are present and **in that** said time switching means will switch after a predetermined period of time in order to cease the supply voltage to the control device in the absence of a trigger signal and of a voltage being supplied by the dynamo and/or the charging device.

11. A bicycle lighting device according to claim 10, **characterized in that** the control device (52) is a programmable control device.

## Patentansprüche

1. Beleuchtungseinrichtung für ein Fahrrad, umfassend ein oder mehrere Beleuchtungselemente (43-44), einen Dynamo (40), eine DC-Spannungsquelle (68) sowie Mittel, um wenigstens ein Beleuchtungselement in dem Falle, dass der von dem Dynamo (40) zugeführte Strom/die von dem Dynamo (40) zugeführte Spannung ausfällt, mit Leistung von der DC-Spannungsquelle (68) zu versorgen, **dadurch gekennzeichnet, dass** das Mittel wenigstens drei FET's (41, 42, 76), die in einem offenen, leitfähigen Zustand, worin Spannung hindurchgeführt wird, und einem geschlossenen, nichtleitenden Zustand, worin Spannung nicht hindurchgeführt wird, betreibbar sind, umfasst, sowie eine Steuerungseinrichtung (52), die wirkungsgemäß mit wenigstens den drei FET's, dem Dynamo und der DC-Spannungsquelle (68) verbunden ist, worin der erste (41) und ein zweiter (42) FET in Reihe und entgegengesetzt zwischen dem Dynamo (40) und dem einen oder den mehreren Beleuchtungselementen (43-44) verbunden sind, und der dritte FET (76) in Reihe zwischen der DC-Spannungsquelle (68) und dem einen oder den mehreren Beleuchtungselementen (43, 44) verbunden ist, und worin die Steuerungseinrichtung (52) dazu ausgebildet ist, den ersten und zweiten FET (41, 42) in ihren offenen, leitfähigen Zustand zu bringen, wenn der Steuerungseinrichtung Spannung von dem Dynamo (40) zugeführt wird, und worin die Steuerungseinrichtung (52) dazu ausgebildet ist, den dritten FET (76) bei der Abwesenheit einer Spannung, die von dem Dynamo (40) der Steuerungseinrichtung zugeführt wird, in seinen offen, leitfähigen Zustand zu bringen.

2. Beleuchtungseinrichtung für ein Fahrrad nach Anspruch 1, **dadurch gekennzeichnet, dass** die Steuerungseinrichtung (52) dazu ausgebildet ist, die Anwesenheit oder Abwesenheit einer Spannung, die von dem Dynamo (40) zugeführt wird, zu erfassen, dass Signale, die eine AC-Spannungskomponente umfassen, an einem ersten und einem zweiten Ausgang (51, 53) der Steuerungseinrichtung anliegen, wenn von dem Dynamo (40) eine Spannung zugeführt wird, wobei die AC-Spannungskomponenten von gleicher Frequenz und entgegengesetzter Phase sind.

3. Beleuchtungseinrichtung für ein Fahrrad nach Anspruch 2, **dadurch gekennzeichnet, dass** der erste und zweite FET (41, 42) miteinander über ihren Source-Anschluss verbunden sind, dass der erste FET (41) mit dem Dynamo (40) mit einem Drain-Anschluss verbunden ist und, dass der Drain-Anschluss des zweiten FET (42) mit einem oder mehreren der Beleuchtungselemente (43, 44) verbunden ist, dass der erste (51) und der zweite (53) Ausgang der Steuerungseinrichtung (52) mit einer Spannungsvervielfachungsschaltung (46-49; 54) verbunden sind und, dass ein dritter bzw. ein vierter Ausgang der Spannungsvervielfachungsschaltung mit den Gate-Anschlüssen bzw. den Source-Anschlüssen des ersten und zweiten FET (41-42) verbunden sind.

4. Beleuchtungseinrichtung für ein Fahrrad nach einem der voranstehenden Ansprüche, **dadurch gekennzeichnet, dass** die DC-Spannungsquelle (68) eine Batterie ist und, dass eine Schaltung zur Erzeugung einer Versorgungsspannung (56) vorgesehen ist, um eine Versorgungsspannung für die Steuerungsschaltung zu erzeugen, welche Schaltung zur Erzeugung einer Versorgungsspannung mit der Batterie verbunden ist.

5. Beleuchtungseinrichtung für ein Fahrrad nach Anspruch 4, **dadurch gekennzeichnet, dass** die Schaltung zur Erzeugung einer Versorgungsspannung ausgelöst werden kann und, dass Auslöser-Mittel da sind, um die Schaltung zur Erzeugung einer Versorgungsspannung zu aktivieren.

6. Beleuchtungseinrichtung für ein Fahrrad nach Anspruch 5, **dadurch gekennzeichnet, dass** das Auslöser-Mittel dazu ausgebildet ist, ein Auslöser-Signal von einem oder mehreren von dem Dynamo (40), einem mit der Batterie verbundenen Schalter (69) oder einer Ladeeinrichtung (61) der Batterie (68) zu empfangen.

7. Beleuchtungseinrichtung für ein Fahrrad nach einem der voranstehenden Ansprüche, **dadurch gekennzeichnet, dass** die Batterie vom Erhaltungsladungstyp (float-charge type battery) ist und **dadurch**, dass eine Schaltung zur Begrenzung eines Ladestroms zwischen dem Dynamo und/oder der Ladeeinrichtung einerseits und der Batterie andererseits angeordnet ist.

8. Beleuchtungseinrichtung für ein Fahrrad nach Anspruch 7, **dadurch gekennzeichnet, dass** die Schaltung zur Begrenzung eines Ladestroms zwischen kontinuierlichem Laden und Erhaltungsladen elektronisch einstellbar ist.

9. Beleuchtungseinrichtung für ein Fahrrad nach Anspruch 8, **dadurch gekennzeichnet, dass** der erste Eingang der Schaltung zur Begrenzung eines Ladestroms mit einem fünften Ausgang der Steuerungsschaltung verbunden ist, dass die Steuerungsschaltung dazu ausgebildet ist, zu erfassen, in welchem Umfang die Batterie geladen ist, sowie dem fünften Ausgang ein Signal zuzuliefern, um die Schaltung zur Begrenzung eines Ladestroms auf Erhaltungsladen umzuwechseln, wenn der Umfang, in welchem die Batterie geladen ist, hinreichend hoch ist.

10. Beleuchtungseinrichtung für ein Fahrrad nach einem der Ansprüche 4 - 6, **dadurch gekennzeichnet, dass** ein Zeit-Schalt-Mittel vorgesehen ist und, dass das Zeit-SchaltMittel nach einer vorbestimmten Zeitperiode schalten wird, um bei der Abwesenheit eines Auslöser-Signals und einer Spannung, die von dem Dynamo und/oder der Ladeeinrichtung zugeführt wird, die Versorgungsspannung an die Steuerungseinrichtung zu unterbrechen.

11. Beleuchtungseinrichtung für ein Fahrrad nach Anspruch 10,
**dadurch gekennzeichnet, dass** die Steuerungseinrichtung (52) eine programmierbare Steuerungseinrichtung ist.

## Revendications

1. Dispositif d'éclairage d'une bicyclette comprenant un ou plusieurs éléments d'éclairage (43, 44), une dynamo (40), une source de tension continue (68) et des moyens pour alimenter au moins un élément d'éclairage avec une puissance de la source de tension continue (68) lorsque le courant et/ou la tension apporté(s) par la dynamo (40) chute(nt), **caractérisé en ce que** lesdits moyens comprennent au moins trois transistors à effet de champs (41, 42, 76) étant utilisables dans un état ouvert conducteur, dans lequel la tension est envoyée et un état fermé non conducteur, dans lequel la tension n'est pas envoyée, ainsi qu'un dispositif de contrôle (52) étant connecté de manière opérationnelle à au moins lesdits trois transistors à effet de champs, ladite dynamo et ladite source de tension continue (68), dans lequel ledit premier (41) et ledit second (42) transistors à effet de champs sont connectés en série et en opposition entre la dynamo (40) et ledit ou lesdits éléments d'éclairage (43, 44), et ledit troisième transistor à effet de champs (76) est connecté en série entre la source de tension continue (68) et ledit ou lesdits éléments d'éclairage (43, 44) et dans lequel ledit dispositif de contrôle (52) est disposé de manière à amener le premier et le second transistors à effet de champs (41, 42) dans leur état ouvert conducteur, lorsque la tension est fournie par le dynamo (40) audit dispositif de contrôle, et dans lequel le dispositif de contrôle (52) est disposé de manière à amener ledit troisième transistor à effet de champs (76) dans son état ouvert conducteur en l'absence d'une tension fournie par la dynamo (40) audit dispositif de contrôle.

2. Dispositif d'éclairage d'une bicyclette selon la revendication 1, **caractérisé en ce que** le dispositif de contrôle (52) est disposé de manière à détecter la présence ou l'absence de tension fournie par la dynamo (40), **en ce que** les signaux comprenant une composante de tension continue sont présents sur une première et une seconde sorties (51, 53) du dispositif de contrôle lorsqu'une tension est fournie par la dynamo (40), lesdits composants de tension continue sont de fréquence égale et de phase opposée.

3. Dispositif d'éclairage de vélo selon la revendication 2, **caractérisé en ce que** le premier et le second transistors à effet de champs (41, 42) sont interconnectés via leur connexion de source, **en ce que** le premier transistor à effet de champs (41) est connecté à la dynamo (40) avec une connexion de drains et **en ce que** la connexion de drains du second transistor à effet de champs (42) est connectée à un ou plusieurs éléments d'éclairage (43, 44), **en ce que** la première (51) et la seconde (53) sorties du dispositif de contrôle (52) sont connectées à un circuit multiplicateur de tension (46 à 49; 54) et **en ce qu'**une troisième et une quatrième sorties du circuit multiplicateur de tension sont respectivement connectées à des connexions de grille et les connexions de source respectivement du premier et du second transistors à effet de champs (41, 42).

4. Dispositif d'éclairage d'une bicyclette selon l'une quelconque des revendications précédentes, **caractérisé en ce que** la source de tension continue (68) est une batterie et **en ce qu'**un circuit générateur de tension d'alimentation (56) est présent pour générer une tension d'alimentation pour le circuit de contrôle, ledit circuit générateur de tension d'alimentation est connecté à la batterie.

5. Dispositif d'éclairage d'une bicyclette selon la revendication 4, **caractérisé en ce que** le circuit générateur de tension d'alimentation peut être déclenché et **en ce que** des moyens de déclenchement sont présents pour activer le circuit générateur de tension d'alimentation.

6. Dispositif d'éclairage de vélo selon la revendication 5, **caractérisé en ce que** les moyens de déclenchement sont disposés pour recevoir un signal de déclenchement d'une ou de plusieurs dynamo (40), avec un bouton connecté à la batterie (69) et un dispositif de charge (61) de la batterie (68).

7. Dispositif d'éclairage d'une bicyclette selon l'une quelconque des revendications précédentes, **caractérisé en ce que** la batterie est une batterie de type à charge d'entretien et **en ce qu'**un circuit de limitation de courant de charge est disposé entre la dynamo et/ou le dispositif de charge d'une part et la batterie d'autre part.

8. Dispositif d'éclairage d'une bicyclette selon la revendication 7, **caractérisé en ce que** le circuit de limitation de courant de charge peut être ajusté électroniquement entre la charge continue et la charge d'entretien.

9. Dispositif d'éclairage d'une bicyclette selon la revendication 8, **caractérisé en ce que** la première entrée du circuit de limitation de courant de charge est connecté à une cinquième sortie du circuit de contrôle, **en ce que** le circuit de contrôle est disposé de manière à détecter l'importance de la charge de la batterie et pour envoyer un signal à la cinquième sortie pour commuter le circuit de limitation de courant de charge à la charge d'entretien si l'importance de la charge de la batterie est suffisamment élevée.

10. Dispositif d'éclairage d'une bicyclette selon l'une quelconque des revendications 4 à 6, **caractérisé en ce que** des moyens de commutation de temps sont présents et **en ce que** lesdits moyens de commutation de temps vont commuter après une période de temps prédéterminée afin d'interrompre la tension d'alimentation au dispositif de contrôle en l'absence d'un signal de déclenchement et d'une tension fournie par la dynamo et/ou le dispositif de charge.

11. Dispositif d'éclairage d'une bicyclette selon la revendication 10, **caractérisé en ce que** le dispositif de contrôle (52) est un dispositif de contrôle programmable.
